(19) Europäisches Patentamt
European Patent Office
Office européen des brevets

(11) **EP 2 159 561 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(51) Int Cl.:
***G01M 17/04*** *(2006.01)*

(21) Anmeldenummer: **09167762.5**

(22) Anmeldetag: **13.08.2009**

(54) **Verfahren und Vorrichtung zum Prüfen eines Schwingungsdämpfers eines Kraftfahrzeugs im eingebauten Zustand**

Method and device for testing a built-in vibration damper of a motor vehicle

Procédé et dispositif d'essai d'un amortisseur d'oscillations d'un véhicule automobile en état intégré

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **10.08.2009 DE 102009028368**
**01.09.2008 DE 102008041742**

(43) Veröffentlichungstag der Anmeldung:
**03.03.2010 Patentblatt 2010/09**

(73) Patentinhaber: **Robert Bosch GmbH**
**70442 Stuttgart (DE)**

(72) Erfinder:
• **Nobis, Guenter**
**72622, Nuertingen (DE)**
• **Wegener, Daniel**
**52064, Aachen (DE)**

(56) Entgegenhaltungen:
**EP-A2- 0 611 960 DE-A1-102004 024 239**

**Beschreibung**

Die vorliegende Erfindung betrifft ein Verfahren und eine Vorrichtung zum Prüfen wenigstens eines Schwingungsdämpfers eines Kraftfahrzeugs im eingebauten Zustand nach dem Oberbegriff der unabhängigen Ansprüche.

Stand der Technik

Derzeit eingesetzte Verfahren zur Bestimmung des Dämpfungsmaßes von in einem Kraftfahrzeug eingebauten Schwingungsdämpfern (Stoßdämpfern), bei denen Schwingungsdämpfer-Prüfanlagen eingesetzt werden, basierend häufig auf stark vereinfachenden Modellannahmen und liefern nur ungenaue Ergebnisse. Andere Verfahren zur Bestimmung des Dämpfungsmaßes von in Kraftfahrzeug eingebauten Schwingungsdämpfern, die eine Hindernisüberfahrt des Kraftfahrzeugs erfordern, benötigen viel Platz und sind daher nur schwer innerhalb einer Kraftfahrzeugwerkstatt zu realisieren, da hier oft nur ein begrenzter Raum zur Verfügung steht.

Ein Verfahren der eingangs genannten Art ist aus EP 611960 A2 bekannt, bei dem mittels eines mathematischen Modells eine Differenz aus den Bewegungsamplituden und den Bewegungsgeschwindigkeiten eines Rades des Kraftfahrzeugs mit der Beschleunigung des Rades in Beziehung gesetzt werden und das Dämpfungsmaß nach einem Parameterschätzverfahren aus diesen Beziehungen ermittelt wird, wobei zur Bestimmung der Qualität des Schwingungsdämpfers das geschätzte Dämpfungsmaß mit einem Referenzwert verglichen wird.

Weiterhin wurde mit der DE-Patentanmeldung 102008041745.7 vorgeschlagen, die Räder des Kraftfahrzeuges mit einer Anregungsfrequenz in Schwingung zu versetzen, die Anregungsfrequenz derart zu ändern, dass die Aufbaueigenfrequenz des Fahrzeugs durchfahren wird, aus den Schwingungsamplituden der Radschwingung und der Aufbauschwingung das Amplitudenverhältnis zu ermitteln und anhand des maximalen Amplitudenverhältnisses in der Resonanzstelle der Aufbaueigenfrequenz das Dämpfungsmaß zu bestimmen, welches dann wiederum mit einem vorbestimmten Referenzwert verglichen wird.

Aufgabe der vorliegenden Erfindung ist es, ein Verfahren zur Bestimmung des Dämpfungsmaßes von in einem Kraftfahrzeug eingebauten Schwingungsdämpfern anzugeben, welches eine einfache und zugleich genauere Bewertung der Schwingungsdämpfer im eingebauten Zustand auf bisher üblichen Schwingungsdämpfer-Prüfanlagen ermöglicht.

Offenbarung der Erfindung

Diese Lösung der Aufgabe erfolgt mit den kennzeichnenden Merkmalen der unabhängigen Ansprüche. Das erfindungsgemäße Verfahren und die erfindungsgemäße Vorrichtung zeichnen sich im Wesentlichen dadurch aus, dass das Dämpfungsmaßes anhand der Übertragungsfunktion von Radschwingung zur Aufbauschwingung mit einer beliebigen Frequenzanregung zwischen Aufbau- und Radresonanzfrequenz bestimmt wird.

Die vorgeschlagene Lösung baut auf der Eigenschaft eines Einmassenschwingers auf und verbindet diese mit dem Einsatz an bekannten Schwingungsdämpfer-Prüfanlagen, bei denen die Anregungsfrequenz in einem vorgegebenen Frequenzbereich verändert werden kann. Das Verfahren verzichtet auf Annahmen zur Modellvereinfachung, wodurch eine höhere Genauigkeit des Prüfergebnisses möglich wird. Das Fehlerpotenzial der Reifencharakteristik, der Aufbaumasse sowie weitere Fehlerpotenziale aufgrund von stark vereinfachenden Modellannahmen entfallen dadurch.

In der Summe wird ein robustes und genaues Verfahren zur Bewertung von Schwingungsdämpfern im eingebauten Zustand bereitgestellt. Das erfindungsgemäße Verfahren reduziert gegenüber dem eingangs erwähnten Resonanzverfahren, bei der die Aufbaueigenfrequenz durchfahren wird, den Aufwand für eine Nachrüstung von im Feld befindlichen Schwingungsdämpfer-Prüfanlagen, indem auf den Einbau eines stärkeren Antriebsmotors und den Austausch der Exzenter zur Realisierung größerer Schwingamplituden verzichtet werden kann.

Die vorgeschlagene Lösung basiert auf der Betrachtung eines Viertelfahrzeugs als Einmassenschwinger. Die schwingungstechnischen Grundlagen zur Bewertung des Schwingverhaltens eines Einmassenschwingers werden im Folgenden erläutert. Das Schwingverhalten des Einmassenschwingers wird nach Aufstellen der Newtonschen Bewegungsgleichung mit der folgenden Differentialgleichung beschrieben:

$$\ddot{x} + 2\vartheta\varpi_0(\dot{x} - \dot{s}) + \omega_0^2(x - s) = 0 \qquad (1)$$

mit

$$\vartheta = \frac{k}{2 \cdot m \cdot \omega_0} \qquad (2)$$

und

$$\omega_0 = \sqrt{\frac{c}{m}} \qquad\qquad (3)$$

wobei m die Masse, c die Federsteifigkeit und k die Dämpfungskonstante ist. Die Bewegung der Masse ist mit x und die der Schwingungsanregung mit s bezeichnet. Dabei bezeichnet $\vartheta$ das Dämpfungsmaß und $\omega_0$ die ungedämpfte Eigenfrequenz des Einmassenschwingers.

Bei einer harmonischen Sinusanregung lässt sich für den eingeschwungenen Zustand die Übertragungsfunktion V, d.h. das Amplitudenverhältnis zwischen Eingangsschwingung s und Ausgangsschwingung x, nach folgender Gleichung bestimmen:

$$V = \frac{x}{s} = \sqrt{\frac{1+(2\vartheta\eta)^2}{(1-\eta^2)^2+(2\vartheta\eta)^2}} \qquad\qquad (4)$$

Der Parameter $\eta$ stellt dabei das Verhältnis der Anregungsfrequenz zur ungedämpften Aufbaueigenfrequenz (Resonanzfrequenz) des Einmassenschwingers dar.

Die Übertragungsfunktionen für verschiedene Dämpfungsmaße $\vartheta$ haben jeweils ein Maximum bei der gedämpften Eigenfrequenz, die wiederum abhängig ist vom jeweiligen Dämpfungsmaß $\vartheta$.

Ausführungsbeispiel

Ein Ausführungsbeispiel der Erfindung ist in der Zeichnung dargestellt und in der nachfolgenden Beschreibung näher erläutert.

Es zeigen:

Figur 1    eine schematische Darstellung einer an sich bekannten Schwingungsdämpfer-Prüfanlage;

Figur 2    eine Prinzipskizze eines Einmassen-Schwingungsmodells am Beispiel eines Fahrzeugrades;

Figur 3    ein exemplarisches Diagramm von Übertragungsfunktionen mit dem Amplitudenverhältnis in Abhängigkeit vom Frequenzverhältnis für verschiedene Dämpfungsmaße;

Figur 4    ein exemplarisches Diagramm von Übertragungsfunktionen mit dem Amplitudenverhältnis in Abhängigkeit vom Frequenzverhältnis > 3 für verschiedene Dämpfungsmaße;

Figur 5    ein exemplarisches Diagramm von Übertragungsfunktionen mit dem Amplitudenverhältnis in Abhängigkeit vom Dämpfungsmaß für verschiedene Frequenzverhältnisse;

Figur 6    ein exemplarisches Diagramm der Schwingungsamplitude A einer Radschwingung sR in Abhängigkeit der Anregungsfrequenz für verschiedene Dämpfungseinstellungen;

Figur 7    ein exemplarisches Diagramm des Amplitudenverhältnisses in Abhängigkeit der Anregungsfrequenz für verschiedne Dämpfungseinstellungen;

Figur 8    ein exemplarisches Diagramm einer Dämpfungsmaß-Dämpferleistungs-Darstellung.

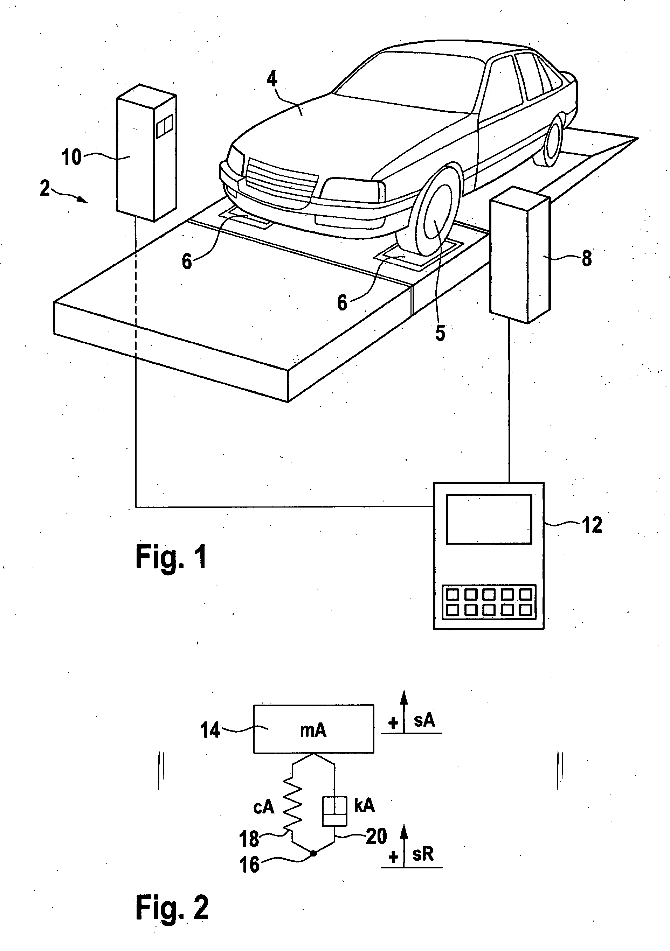

Figur 1 zeigt eine Schwingungsdämpfer-Prüfanlage 2, auf der ein Kraftfahrzeug 4 steht, dessen vordere Schwingungsdämpfer (Stoßdämpfer) erfindungsgemäß überprüft werden sollen. Die Schwingungsdämpfer-Prüfanlage 2 umfasst eine Auffahrt, zwei Schwingplatten 6, auf denen die Vorderräder 5 des Kraftfahrzeugs 4 stehen, sowie zwei auf Höhe der Schwingplatten 6 angeordnete Messköpfe 8 und 10. Die Messköpfe 8 und 10 verfügen über eine Messtechnik zur Erfassung der Radschwingung sR und die Aufbauschwingung sA während der Schwingungsanregung mit unterschiedlichen Anregungsfrequenzen $f_A$. In dem vorliegenden Ausführungsbeispiel ist diese Messtechnik als jeweils nach innen gerichtete Messkameras, bspw. CCD-Sensoren, ausgebildet, die in geeigneter Höhe angebracht und in der Lage sind, die Position des Fahrzeugrads 5 und der Karosserie des Kraftfahrzeugs 4, insbesondere bestimmter Merkmale auf dem Rad, bspw. das Felgenhorn oder bestimmte Bohrungen, und auf der Karosserie, bspw. den Rand des Kotflügels, optisch zu erfassen. Bei dem vorliegenden Ausführungsbeispiel erfolgt die Messung durch eine kamerabasierte optische Wegmessung. Neben einer kamerabasierten optischen Wegmessung sind auch andere bekannte Wegmesssysteme einsetzbar, die beispielsweise eine Messfrequenz > 25 Hz aufweisen.

Die Schwingplatten 6 sind mit einem darunter angeordneten, nicht dargestellten Antrieb ausgestattet, der in der Lage ist, die Schwingplatten 6 mit einer Anregungsfrequenz $f_A$ zu einer vertikalen Schwingung anzuregen. Insbesondere kann der Antrieb die Schwingplatten 6 mit einer Anregungsfrequenz $f_A$ in einem Bereich zwischen 0,7 bis 2,0 Hz und auch darüber hinaus anregen. Der Antrieb ist dabei als geregelter Antrieb ausgebildet, der einen Frequenzbereich von zumindest ± 2 Hz bezogen auf die mittlere spezifische Frequenz ermöglicht.

Die Schwingungsdämpfer-Prüfanlage 2 verfügt ferner über eine Steuereinheit 12, in der ein Algorithmus implementiert ist, um das Dämpfungsmaß $\vartheta$ des Schwingungsdämpfers gemäß eines später beschriebenen Verfahrensablaufs zu berechnen. Die Steuereinheit 12 steuert außerdem den Antrieb der Schwingplatten 6 sowie die Messkameras der Messköpfe 8 und 10 und verarbeitet die Messwerte von den Messkameras der Messköpfe 8 und 10. Mittels der Steuereinheit 12 wird somit der Ablauf des gesamten erfindungsgemäßen Prüfverfahrens gesteuert, der Antrieb der Schwingplatten 6 geregelt, die Messwerte der Messköpfe 8 und 10 erfasst, das Amplitudenverhältnis $V_p$ und das Dämpfungsmaß $\vartheta$ nach den später beschriebenen Gleichungen berechnet, das berechnete Dämpfungsmaß $\vartheta$ mit einem Referenzwert verglichen und schließlich die Prüfergebnisse auf einer Ausgabeeinheit ausgegeben.

Die Steuereinheit 12 kann des Weiteren über ein Bedienteil verfügen, mit dem Daten für das zu prüfende Kraftfahrzeug 4 manuell über eine angeschlossene Tastatur, über eine Datenkopplung zu einem anderen Computer oder durch Einlesen von einem Speichermedium eingegeben werden können. Mit dem Bedienteil kann die Schwingungsdämpfer-Prüfanlage 2 bedient werden. Es können fahrzeugspezifische Kriterien / Kennwerte manuell oder automatisch eingegeben werden, oder das Fahrzeug kann manuell oder automatisch identifiziert werden.

Das in Figur 2 dargestellte Schwingungsmodell ist ein wegangeregtes Einmassenschwingsystem (EMS) eines Fahrzeugs, mit dem sich die Schwingung zwischen dem Fahrzeugaufbau und dem Kraftfahrzeugrad 5 beschreiben lässt. Das Schwingungsmodell stellt die Betrachtung eines Viertelfahrzeugs dar, d. h. eine Achsseite mit einer anteiligen Aufbaumasse mA.

Die Kraftfahrzeugmasse bzw. Aufbaumasse mA ist mit dem Bezugszeichen 14 gekennzeichnet und schematisch als Rechteck dargestellt. Die Radachse bzw. die Radaufhängung ist mit dem Bezugszeichen 16 gekennzeichnet. Die Radführung des Kraftfahrzeugs wird von einer Feder 18 mit der Federsteifigkeit cA und von dem parallelen Dämpfungsglied 20 mit dem Dämpfungsfaktor kA gebildet. Die Aufbaumasse 14 wird durch die Feder 18 abgestützt.

Die Richtung der Bewegung des Kraftfahrzeugrads bzw. die Radbewegung ist mit sR und mit einem nach oben gerichteten Pfeil dargestellt. Die Richtung der Bewegung des Kraftfahrzeugaufbaus mA bzw. eine Aufbaubewegung ist mit sA und ebenfalls mit einem nach oben gerichteten Pfeil dargestellt.

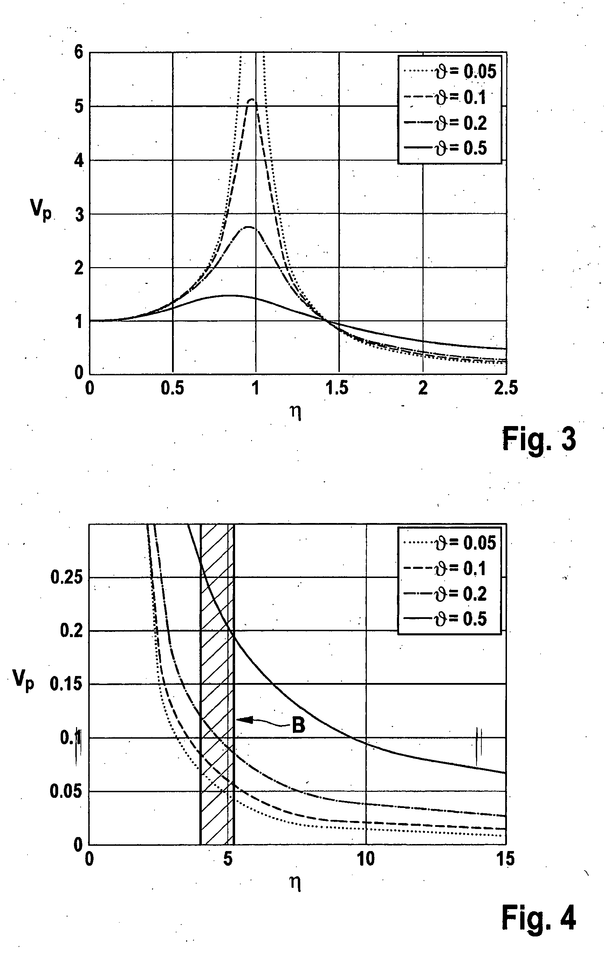

Das erfindungsgemäße Verfahren und die erfindungsgemäße Vorrichtung basieren auf der Messung der Radbewegung sR und der Aufbaubewegung sA auf der vorher beschriebenen Schwingungsdämpfer-Prüfanlage 2, deren Anregungsfrequenz $f_A$ in einem gewissen Frequenzbereich langsam verändert werden kann. Dabei wird beim langsamen Durchfahren dieses Frequenzbereichs das Amplitudenverhältnis Vp nach der Gleichung 6 mittels der beschriebenen Wegmesstechnik erfasst. Damit ist es möglich, die Übertragungsfunktion in einem ausreichenden Bereich des Frequenzverhältnisses η oberhalb des Wertes $\eta = \sqrt{2}$ zu erfassen. Bei $\eta = \sqrt{2}$ nimmt das Amplitudenverhältnis $V_p$ immer den Wert 1 an (Figur 3).

Das erfindungsgemäße Verfahren nutzt die Eigenschaft der Einmassenschwinger, dass bei unterschiedlich starker Dämpfung bzw. unterschiedlichem Dämpfungsmaß $\vartheta$ die Übertragungsfunktion nicht nur bei η = 1 (Figur 3), sondern auch bei größeren Frequenzverhältnissen., z.B. η > 3 einen unterschiedlichen Verlauf gemäß Figur 4 aufweist.

In Figur 4 ist zusätzlich ein mit B bezeichneter Bereich des Frequenzverhältnisses η eingetragen, der sich bei einer Anregungsfrequenz von 6,4 Hz und einer Variation der Aufbaueigenfrequenz $f_E$ im Bereich von 1,2 bis 1,6 Hz ergibt.

Auf Basis der bekannten Formulierung der Übertragungsfunktion V (Gleichung 4) wurde für die Prüfung von Schwingungsdämpfern auf der beschriebenen Schwingplatten-Prüfanlage 2 eine Lösung gefunden, mit der das Dämpfungsmaß $\vartheta$ aus dem während des Prüfablaufs bestimmten Amplitudenverhältnis $V_p$ und dem Frequenzverhältnis $\eta_p$ bestimmt werden kann:

$$\vartheta = -\frac{1}{\left(2 \cdot V_p^{\,2} - 2\right) \cdot \eta_p} \cdot \sqrt{-\left(V_p^{\,2} - 1\right) \cdot \left(V_p^{\,2} \cdot \eta_p^{\,4} - 2 \cdot V_p^{\,2} \cdot \eta_p^{\,2} + V_p^{\,2} - 1\right)} \qquad (5)$$

mit

$$V_p = \left[\frac{sA}{sR}\right] \qquad (6)$$

und

$$\eta_p = \left[\frac{f_A}{f_E}\right] \tag{7}$$

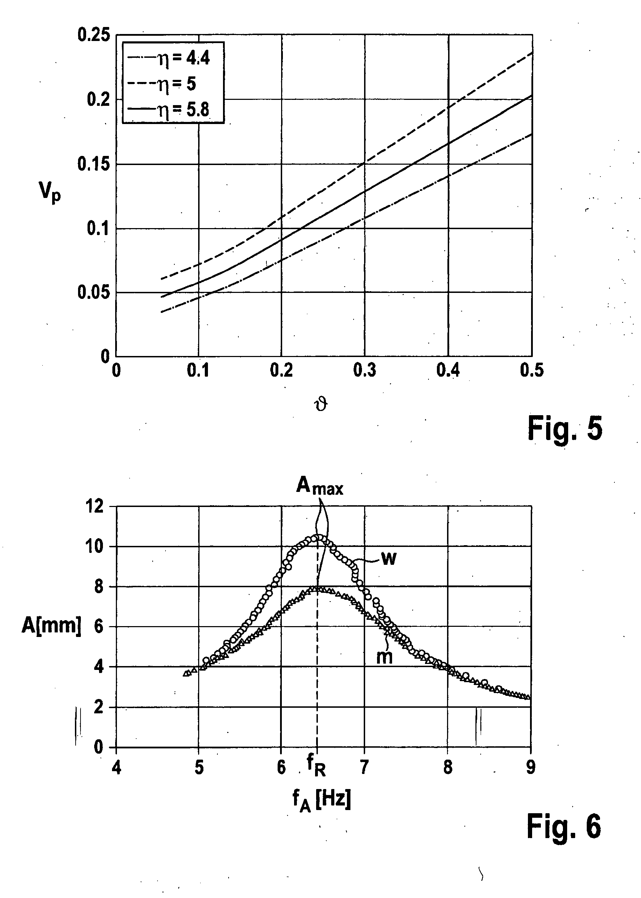

Den Zusammenhang zwischen dem gemessenen Amplitudenverhältnis Vp und dem Dämpfungsmaß $\vartheta$ des gedämpften Schwingungssystems für konstante Frequenzverhältnisse zeigt das Diagramm in Figur 5.

Die beschriebenen Schwingplatten-Prüfanlage 2 weist je nach Auslegung eine spezifische Eigenfrequenz auf. Diese führt beim Durchfahren des vorgesehenen Frequenzbandes der Anregungsfrequenz $f_A$ zur Ausbildung einer prüfstands- und fahrzeugspezifischen Resonanzstelle $f_R$, die sich insbesondere durch eine ausgeprägte Amplitudenerhöhung $A_{max}$ der Radschwingung sR auzeichnet. Dazu sind in Figur 6 die Messergebnisse für unterschiedliche Dämpfereinstellungen dargestellt, wobei w eine weiche und m eine mittlere Dämpfereinstellung angibt und wobei mit A die Amlitude der Radschwingung sR bezeichnet ist. Die Amplitudenerhöhung $A_{max}$ in der Resonanzstelle $f_R$ ist für beide Dämpfereinstellungen deutlich ausgeprägt.

Für die Bestimmung des Dämpfungsmaßes $\vartheta$ nach Gleichung 5 wird bei einer definierten Anregungsfrequenz $f_A$, wenn möglich in der Resonanzstelle $f_R$, das Amplitudenverhältnis Vp gemäß Gleichung 6 und das entsprechende Frequenzverhältnis $\eta_p$ gemäß Gleichung 7 bestimmt. Prinzipiell lässt sich die Methodik bei einer beliebigen Anregungsfrequenz $f_A$ anwenden, aufgrund der verbesserten Messgenauigkeit bei höheren Amplituden ist es jedoch sinnvoll, die Auswertung an einer Resonanzstelle auszuführen.

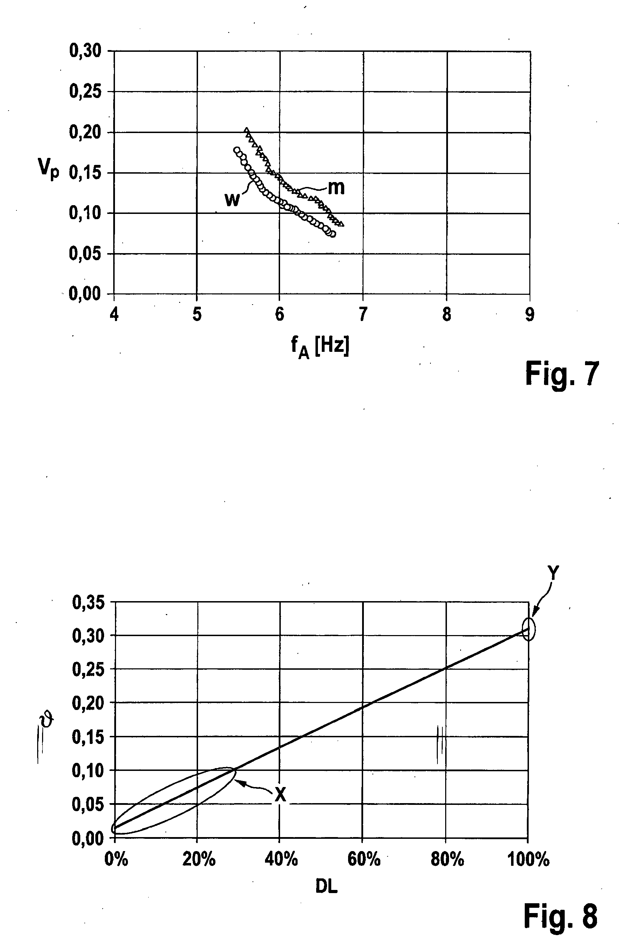

Zusätzlich wird aus den gewonnenen Messwerten eine spezifische Übertragungsfunktion, d.h. die Funktion des gemessenen Amplitudenverhältnisses $V_p$ in Abhängigkeit von der Anregungsfrequenz $f_A$ bestimmt, wie in Figur 7 dargestellt ist, wobei die Messergebnisse für unterschiedliche Dämpfereinstellungen (mittel und weich) dargestellt sind. Aus dieser Übertragungsfunktion kann mittels modellbasierter Parameteridentifikation die Aufbaueigenfrequenz $f_E$ des geprüften Fahrzeugs bzw. der geprüften Fahrzeugachse und zusammen mit der Anregungsfrequenz $f_A$ in der Resonanzstelle $f_R$ gemäß Gleichung 7 das korrekte Frequenzverhältnis $\eta_p$ für das geprüfte Fahrzeug bzw. die geprüfte Fahrzeugachse bestimmt werden.

Die Bestimmung des Dämpfungsmaßes $\vartheta$ für das geprüfte Fahrzeug bzw. die geprüfte Fahrzeugachse erfolgt nach folgendem Verfahrensablauf:

a) Positionieren der Fahrzeugräder 5 einer Fahrzeugachse auf den Schwingplatten 6 der Schwingungsplatten-Prüfanlage 2;

b) Anregen des Fahrzeugrads bzw. der beiden Räder einer Achse zum Schwingen durch die Schwingplatten 6 mit einer regelbaren Anregungsfrequenz $f_A$ in einem vorgegebenen Frequenzbereich;

c) Erfassen der Amplituden der Radschwingung sR und der Aufbauschwingung sA, vorzugsweise in vertikaler Richtung;

d) Bestimmen des Amplitudenverhältnisses $V_p$ als Funktion der Anregungsfrequenz $f_A$ als Teilstück der spezifischen Übertragungsfunktion aus den erfassten Amplituden der Radschwingung sR und der Aufbauschingung sA gemäß Gleichung 6;

e) Bestimmen des Frequenzverhältnisses $\eta_p$ mit dazugehöriger Anregungsfrequenz $f_A$ sowie Berechnen des Dämpfungsmaßes $\vartheta$ nach Gleichung 7 mit den Werten $V_p$ und $\eta_p$ unter Berücksichtigung der Aufbaueigenfrequenz $f_A$ aus einem Teilstück der spezifischen Übertragungsfunktion in einer prüfstandspezifisch ausgeprägten Resonanzstelle $f_R$, die sich durch eine ausgeprägte Amplitudenerhöhung $A_{max}$, insbesondere der Radschwingung sR gemäß Schritt d) auszeichnet, wobei entweder eine mittlere Aufbaueigenfrequenz $f_E$ von 1,4 Hz zugrunde gelegt wird oder diese zur Verbesserung der Genauigkeit aus dem Verlauf der spezifischen Übertragungsfunktion mittels modellbasierter Parameteridentifikation näher bestimmt wird ;

f) Vergleichen des berechneten Dämpfungsmaßes $\vartheta$ mit einem festgelegten Referenzwert;

g) für den Fall, dass das berechnete Dämpfungsmaß $\vartheta$ kleiner als der Referenzwert ist, ein Defekt des Schwingungsdämpfers der geprüften Radaufhängung festgestellt wird;

h) ggf. Wiederholen der Schritte a) bis g) für weitere Achsen des Fahrzeuges.

Dass mit dem erfindungsgemäßen Verfahren über das Bestimmen des Dämpfungsmaßes $\vartheta$ eine Beurteilung des Schwingungsdämpfers im eingebauten Zustand vorgenommen werden kann, wird nachfolgend anhand der bereits beschriebenen Gleichung 2 übertragen auf das Model in Figur 2 mit der Gleichung 8 erläutert.

$$\vartheta = \frac{kA}{2\sqrt{cA \cdot mA}} \qquad\qquad (8)$$

Wenn für ein bestimmtes Fahrzeug nur die Aufbaudämpfung kA geändert wird und alle anderen Parameter konstant bleiben, so ergibt sich aus obiger Gleichung 8 ein linearer Zusammenhang zwischen dem Dämpfungsmaß $\vartheta$ und der Aufbaudämpfung kA. Die Veränderung der Aufbaudämpfung kA während der Nutzungsdauer kann man auf den Neuzustand des Fahrzeuges beziehen. So lässt sich dieser Wert auch relativ zum Neuzustand in % angeben.

Die Messung der für die Aufbaudämpfung wirksamen Dämpfungsarbeit oder Dämpfungsleistung DL von Schwingungsdämpfern erfolgt im ausgebauten Zustand auf speziellen Prüfmaschinen und nach einem genormten Ablauf, welcher als VDA-Messung bezeichnet wird.

Für eine angenommene Radaufhängung mit einem Dämpfungsmaß von 0,31 im Neuzustand lassen sich die theoretischen Zusammenhänge bei abnehmender Dämpferleistung bzw. abnehmender Aufbaudämpfung kA infolge der Fahrzeugnutzung in Diagrammform gemäß Figur 8 darstellen. Ein reales Fahrzeug weist in den Elementen der Radaufhängung eine gewisse Basisdämpfung auf, weshalb die Funktionsgerade auch bei einem ausgebauten Schwingungsdämpfer (Dämpferleistung DL = 0 %) nicht durch den Nullpunkt geht. Aufgrund dieser Zusammenhänge eignet sich das Dämpfungsmaß $\vartheta$ sehr gut für die Bewertung der Schwingungsdämpfer im eingebauten Zustand. In Figur 8 bezeichnet der Bereich X einen defekten Schwingungsdämpfer und der Bereich Y einen neuen, korrekten Schwingungsdämpfer.

Weiterhin ist aus der Literatur bekannt, dass Fahrzeuge im Neuzustand zum Erreichen bestimmter Fahreigenschaften unterschiedliche Dämpfungsmaße $\vartheta$ aufweisen. So liegt das Dämpfungsmaß $\vartheta$ sportlich abgestimmter Fahrwerke bei Werten oberhalb 0,40 und von komfortabel abgestimmten Fahrwerken bei 0,25 [Quelle: M. Mitschke: "Dynamik der Kraftfahrzeuge"; Band B: Schwingungen, Springer 2002]. Aus diesem Grund kann es sinnvoll sein, den Referenzwert für defekte Schwingungsdämpfer in Abhängigkeit von der Fahrzeugauslegung unterschiedlich festzulegen. Für eine exakte Lösung wäre es erforderlich, das Fahrzeug zu identifizieren und aus einer Fahrzeugdatenbank den dort enthaltenen fahrzeugspezifischen Referenzwert zu ermitteln, der dann der Bewertung der Schwingungsdämpfer zugrunde gelegt wird. Für die Praxis wäre aber auch ausreichend, das Fahrzeug nach einfach feststellbaren Kriterien, z.B. Einträge im Fahrzeugschein, einer grob festgelegten Fahrzeugklasse zuzuordnen, für die dann klassenspezifische Referenzwerte festgelegt sind, die dann der Bewertung zugrunde gelegt werden. Eine derartige Klassierung könnte beispielsweise mit den Fahrzeugklassen Sportfahrzeuge, Normalfahrzeuge und komfortable Fahrzeuge gegeben sein.

In diesem zuletzt beschriebenen Fall würde der weiter oben beschriebene Verfahrensablauf mit den Schritten a) bis g) ergänzt durch einen vorangestellten Schritt, bei dem durch manuelles oder automatische Erfassung zumindest eines Eintrages aus dem Fahrzeugschein, eine Zuordnung zu einer der vordefinierten Fahrzeugklassen erfolgt. Das berechnete Dämpfungsmaß $\vartheta$ wird dann gemäß Schritt f) mit dem festgelegten klassenspezifische Referenzwert verglichen, welcher die Fahrzeugklasse berücksichtigt. Ist das berechnete Dämpfungsmaß $\vartheta$ kleiner als der klassenspezifische Referenzwert, wird gemäß Schritt g) ein Defekt des Schwingungsdämpfers der geprüften Radaufhängung festgestellt.

Die bei bisher bekannten Verfahren erforderlichen Annahmen für die Berechnung des zugrundeliegenden Bewertungsmodells bzw. aufwändige Schätzverfahren für Modellparameter sind bei dem beschriebenen Verfahrensablauf nicht erforderlich und erhöhen somit die Genauigkeit der Prüfung.

**Patentansprüche**

1. Verfahren zum Prüfen wenigstens eines Schwingungsdämpfers eines Kraftfahrzeugs (4) im eingebauten Zustand, aufweisend

    - Anregen eines Fahrzeugrads (5) bzw. beider Fahrzeugräder einer Achse zum Schwingen durch die Schwingplatten (6) mit einer regelbaren Anregungsfrequenz $f_A$ in einem vorgegebenen Frequenzbereich;
    - Erfassen einer Amplitude einer Radschwingung sR und einer Aufbauschwingung sA;
    - Bestimmen eines Amplitudenverhältnisses Vp als Funktion der Anregungsfrequenz $f_A$ in einer spezifischen Übertragungsfunktion aus den erfassten Amplituden einer Radschwingung sR und einer Aufbauschwingung sA;
    - Berechnen eines Dämpfungsmaßes $\vartheta$ in einer spezifisch ausgeprägten Resonanzstelle $f_R$, die sich durch eine ausgeprägte Amplitudenerhöhung $A_{max}$ auszeichnet;
    - Vergleichen des berechneten Dämpfungsmaßes $\vartheta$ mit einem festgelegten Referenzwert und Ermitteln eines fehlerhaften Schwingungsdämpfers, wenn das berechnete Dämpfungsfnaß $\vartheta$ von dem vorbestimmten Referenzwert abweicht.

2. Verfahren nach Anspruch 1, **dadurch gekennzeichnet, dass** das Dämpfungsmaßes $\vartheta$ unter Berücksichtigung einer Aufbaueigenfrequenz $f_E$ ermittelt wird.

3. Verfahren nach Anspruch 2, **dadurch gekennzeichnet, dass** an der spezifischen Resonanzstelle $f_R$ entweder eine mittlere Aufbaueigenfrequenz $f_E$ von 1,4 Hz zugrunde gelegt wird oder die Aufbaueigenfrequenz $f_E$ aus dem Verlauf der spezifischen Übertragungsfunktion mittels modellbasierter Parameteridentifikation bestimmt wird.

4. Verfahren nach Anspruch 1, **dadurch gekennzeichnet, dass** das Dämpfungsmaß $\vartheta$ anhand der folgenden Formel bestimmt wird:

$$\vartheta = -\frac{1}{\left(2 \cdot V_p^{\,2} - 2\right) \cdot \eta_p} \cdot \sqrt{-\left(V_p^{\,2} - 1\right) \cdot \left(V_p^{\,2} \cdot \eta_p^{\,4} - 2 \cdot V_p^{\,2} \cdot \eta_p^{\,2} + V_p^{\,2} - 1\right)},$$

wobei $\eta_P$ das Frequenzverhältnis ist, das sich aus dem Verhältnis einer vordefinierten Anregungsfrequenz $f_A$ des Prüfstandes und der mittleren Aufbaueigenfrequenz $f_E$ ergibt, und wobei sich das Amplitudenverhältnis $V_P$ aus

$$V_p = \left[ \frac{sA}{sR} \right]$$

bei einer definierten Anregungsfrequenz $f_A$ des Prüfstandes, vorzugsweise in der spezifischen Resonanzstelle $f_R$, ergibt.

5. Verfahren nach einem der Anspruch 1, **dadurch gekennzeichnet, dass** der vorbestimmte Referenzwert eine für alle Fahrzeuge konstante Größe aufweist.

6. Verfahren nach einem der Anspruch 1, **dadurch gekennzeichnet, dass** der vorbestimmte Referenzwert aus einer Fahrzeugdatenbank ermittelt wird.

7. Verfahren nach Anspruch 6, **dadurch gekennzeichnet, dass** der Referenzwert bestimmt wird, indem das zu prüfende Kraftfahrzeug (4) einer Fahrzeugklasse mit einer bestimmter Schwingungsauslegung, insbesondere einer Sportfahrzeugklasse, einer Normalfahrzeugklasse und einer Komfortfahrzeugklasse, anhand der Informationen aus dem Fahrzeugschein zugeordnet wird, und dass der für diese Fahrzeugklasse vorbestimmte Referenzwert als Referenzwert verwendet wird.

8. Vorrichtung zum Prüfen wenigstens eines Schwingungsdämpfers eines Kraftfahrzeugs (4) im eingebauten Zustand mit einer Schwingungsdämpfer-Prüfanlage (2), welche Schwingplatten (6), Mess-Sensoren oder Messkameras (8, 10), eine Steuereinheit (12) und einen Antrieb zur Schwingungsanregung der Schwingplatten (6) aufweist, wobei der Antrieb dazu ausgebildet ist, eine Erregerfrequenz $f_A$ wenigstens einer Schwingplatte (6) in einem Frequenzbereich zumindest in der Umgebung einer Aufbaueigenfrequenz $f_E$ einzustellen und zu verändern, wobei die Mess-Sensoren oder Messkameras (8, 10) dazu ausgebildet sind die Radschwingung sR und die Aufbauschwingung sA des Fahrzeugs (4) zu erfassen, **dadurch gekennzeichnet, dass** die Steuereinheit (12) einen Algorithmus enthält dazu ausgebildet den Antrieb so anzusteuern, dass die Schwingplatte (6) zunächst mit der Anregungsfrequenz $f_A$ in der Umgebung der Aufbaueigenfrequenz $f_E$ betrieben wird, die von den Mess-Sensoren oder Messkameras (8,10) erfassten Schwingungsamplituden der Radschwingung sR und der Aufbauschwingung sA in der Umgebung der Aufbaueigenfrequenz $f_E$ zu erhalten, und das Dämpfungsmaßes $\vartheta$ des Schwingungsdämpfers zu berechnen, dass die Steuereinheit (12) weiterhin derart ausgebildet ist, um das Dämpfungsmaßes $\vartheta$ in einer spezifisch ausgeprägten Resonanzstelle $f_R$, die sich durch eine ausgeprägte Amplitudenerhöhung $A_{max}$ auszeichnet, zu berechnen.

9. Vorrichtung nach Anspruch 8, **dadurch gekennzeichnet, dass** des Weiteren eine Bedieneinheit vorgesehen ist, mittels derer fahrzeugspezifische Kennwerte und Kriterien, insbesondere der Fahrzeugtyp, oder ein Referenzwert in die Steuereinheit (12) eingebbar sind.,

**10.** Vorrichtung nach Anspruch 8, **dadurch gekennzeichnet, dass** des Weiteren eine Leseeinheit und eine Datenbankverbindung vorgesehen ist, mittels derer fahrzeugspezifische Kennwerte und Kriterien ausgelesen und von der Steuereinheit (12) daraus die Zuordnung des zu prüfenden Fahrzeugs zu einer Fahrzeugklasse abgeleitet wird, oder der Referenzwert mit den ausgelesenen Informationen des Fahrzeugscheins von der Steuereinheit (12) aus einer angeschlossenen Datenbank automatisch bestimmt werden.

**Claims**

**1.** Method for testing at least one vibration damper of a motor vehicle (4) in the installed state, comprising

- exciting a vehicle wheel (5) or both vehicle wheels of an axle to vibrate by means of the vibrating plates (6) at a controllable excitation frequency $f_A$ in a prescribed frequency range;
- detecting an amplitude of wheel vibration sR and an vehicle body vibration sA;
- determining an amplitude ratio Vp as a function of the excitation frequency $f_A$ in a specific transfer function from the detected amplitudes of a wheel vibration sR and an vehicle body vibration sA;
- calculating the damping measure $\vartheta$ at a specifically pronounced resonance point $f_R$ which is distinguished by a pronounced increase in amplitude $A_{max}$; and
- comparing the calculated damping measure $\vartheta$ with a fixed reference value, and determining a faulty vibration damper when the calculated damping measure $\vartheta$ deviates from the predetermined reference value.

**2.** Method according to Claim 1, **characterized in that** the damping measure $\vartheta$ is determined by taking account of a vehicle body natural frequency $f_E$.

**3.** Method according to Claim 2, **characterized in that** at the specific resonance point $f_R$ either a mean vehicle body natural frequency $f_E$ of 1.4 Hz is set up as a basis, or the vehicle body natural frequency $f_E$ is determined from the profile of the specific transfer function by means of model-based parameter identification.

**4.** Method according to Claim 1, **characterized in that** the damping measure $\vartheta$ is determined with the aid of the following formula:

$$\vartheta = -\frac{1}{(2 \cdot V_p^2 - 2) \cdot \eta_p} \cdot \sqrt{-(V_p^2 - 1) \cdot (V_p^2 \cdot \eta_p^4 - 2 \cdot V_p^2 \cdot \eta_p^2 + V_p^2 - 1)},$$

$\eta_p$ being the frequency ratio, which results from the ratio of a predefined excitation frequency $f_A$ of the test stand and the mean vehicle body natural frequency $f_E$, and the amplitude ratio Vp resulting from

$$V_p = \left[ \frac{sA}{sR} \right]$$

given a defined excitation frequency $f_A$ of the test stand, preferably at the specific resonance point $f_R$.

**5.** Method according to Claim 1, **characterized in that** the predetermined reference value has a constant magnitude for all vehicles.

**6.** Method according to Claim 1, **characterized in that** the predetermined reference value is determined from a vehicle database.

**7.** Method according to Claim 6, **characterized in that** the reference value is determined by assigning the motor vehicle (4) to be tested to a vehicle class with a specific vibration design, in particular a sports car class, a normal vehicle class and a comfortable vehicle class, with the aid of information from the vehicle certificate, and **in that** the reference value predetermined for said vehicle class is used as reference value.

8. Device for testing at least one vibration damper of a motor vehicle (4) in the installed state, comprising a vibration damper test stand (2) which has vibrating plates (6), measuring sensors or measuring cameras (8, 10), a control unit (12) and a drive for exciting vibrations of the vibrating plates (6), the drive being designed to set and to vary an exciter frequency $f_A$ of at least one vibrating plate (6) in a frequency range at least in the neighbourhood of a vehicle body natural frequency $f_E$, the measuring sensors or measuring cameras (8, 10) being designed to detect the wheel vibration sR and the vehicle body vibration sA of the vehicle (4), **characterized in that** the control unit (12) includes an algorithm designed to control the drive so that the vibrating plate (6) is firstly operated at the excitation frequency $f_A$ in the neighbourhood of the vehicle body natural frequency $f_E$, to obtain the vibrating amplitudes, detected by the measuring sensors or measuring cameras (8, 10), of the wheel vibration sR and of the vehicle body vibration sA in the neighbourhood of the vehicle body natural frequency $f_E$, and to calculate the damping measure $\vartheta$ of the vibration damper, and **in that** the control unit (12) is, furthermore, designed in such a way as to calculate the damping measure $\vartheta$ at a specifically pronounced resonance point $f_R$ which is distinguished by a pronounced increase in amplitude $A_{max}$.

9. Device according to Claim 8, **characterized in that** an operating unit is also provided by means of which vehicle-specific parameters and criteria, in particular the type of vehicle, or a reference value can be input into the control unit (12).

10. Device according to Claim 8, **characterized in that** a reading unit and a database connection are also provided by means of which vehicle-specific parameters and criteria are read out, and the assignment of the vehicle to be tested to a vehicle class is derived by the control unit (12), or the reference value is automatically determined by the control unit (12) from a connected database with the aid of the information read out from the vehicle certificate.

**Revendications**

1. Procédé de contrôle d'au moins un amortisseur d'oscillations d'un véhicule automobile (4) à l'état monté, comprenant les étapes suivantes

   - excitation d'une roue de véhicule (5) ou des deux roues de véhicule d'un essieu en oscillation par les plaques oscillantes (6) à une fréquence d'excitation $f_A$ réglable dans une plage de fréquences prédéfinie ;
   - acquisition d'une amplitude d'une oscillation de roue sR et d'une oscillation de structure sA ;
   - détermination d'un rapport d'amplitude Vp en fonction de la fréquence d'excitation $f_A$ dans une fonction de transfert spécifique à partir des amplitudes acquises d'une oscillation de roue sR et d'une oscillation de structure sA ;
   - calcul d'un coefficient d'amortissement $\vartheta$ dans un point de résonance $f_R$ marqué de manière spécifique, lequel se **caractérise par** une augmentation marquée de l'amplitude $A_{max;}$
   - comparaison du coefficient d'amortissement $\vartheta$ calculé avec une valeur de référence définie et constatation d'un amortisseur d'oscillations défectueux lorsque le coefficient d'amortissement $\vartheta$ calculé diffère de la valeur de référence prédéfinie.

2. Procédé selon la revendication 1, **caractérisé en ce que** le coefficient d'amortissement $\vartheta$ est déterminé en tenant compte d'une fréquence propre de la structure $f_E$.

3. Procédé selon la revendication 1, **caractérisé en ce que** soit le point de résonnance $f_R$ spécifique s'appuie sur une fréquence propre moyenne de la structure $f_E$ de 1,4 Hz, soit la fréquence propre de la structure $f_E$ est déterminée à partir du tracé de la fonction de transfert spécifique au moyen d'une identification des paramètres basée sur un modèle.

4. Procédé selon la revendication 1, **caractérisé en ce que** le coefficient d'amortissement $\vartheta$ est déterminé à l'aide de la formule suivante :

$$\vartheta = \frac{1}{(2 \cdot V_p^2 - 2) \cdot \eta_p} \cdot \sqrt{-(V_p^2 - 1) \cdot (V_p^2 \cdot \eta_p^4 - 2 \cdot V_p^2 \cdot \eta_p^2 + V_p^2 - 1)},$$

où $\eta_p$ désigne le rapport de fréquence qui résulte du rapport entre une fréquence d'excitation $f_A$ prédéfinie du banc d'essais et la fréquence propre moyenne de la structure $f_E$, et le rapport d'amplitude $V_p$ résultant de

$$V_p = \left[\frac{sA}{sR}\right]$$

à une fréquence d'excitation $f_A$ définie du banc d'essais, de préférence au point de résonnance $f_R$ spécifique.

**5.** Procédé selon la revendication 1, **caractérisé en ce que** la valeur de référence prédéfinie possède une valeur constante pour tous les véhicules.

**6.** Procédé selon la revendication 1, **caractérisé en ce que** la valeur de référence prédéfinie est déterminée à partir d'une base de données de véhicules.

**7.** Procédé selon la revendication 6, **caractérisé en ce que** la valeur de référence est déterminée **en ce que** le véhicule (4) à soumettre aux essais est affecté à une catégorie de véhicules ayant un régime d'oscillation donné, notamment une catégorie des véhicules de sport, une catégorie des véhicules normaux et une catégorie des véhicules de luxe, au moyen des informations figurant sur la carte grise du véhicule, et **en ce que** la valeur de référence prédéfinie pour cette catégorie de véhicules est utilisée en tant que valeur de référence.

**8.** Dispositif de contrôle d'au moins un amortisseur d'oscillations d'un véhicule automobile (4) à l'état monté, comprenant un équipement d'essai d'amortisseurs d'oscillations (2) qui possède des plaques oscillantes (6), des capteurs de mesure ou des caméras de mesure (8, 10), une unité de contrôle (12) et un mécanisme d'entraînement destiné à exciter les plaques oscillantes (6) en oscillation, le mécanisme d'entraînement étant conçu pour régler et pour faire varier une fréquence d'excitation $f_A$ d'au moins une plaque oscillante (6) dans une plage de fréquences prédéfinie au moins dans l'environnement d'une fréquence propre de la structure $f_E$, les capteurs de mesure ou les caméras de mesure (8, 10) étant conçus pour acquérir l'oscillation de roue sR et l'oscillation de structure sA du véhicule (4), **caractérisé en ce que** l'unité de contrôle (12) contient un algorithme qui est conçu pour commander le mécanisme d'entraînement de telle sorte que la plaque oscillante (6) fonctionne tout d'abord à la fréquence d'excitation $f_A$ dans l'environnement de la fréquence propre de la structure $f_E$, obtenir les amplitudes d'oscillation de l'oscillation de roue sR et de l'oscillation de structure sA dans l'environnement de la fréquence propre de la structure $f_E$ acquises par les capteurs de mesure ou les caméras de mesure (8, 10), et calculer le coefficient d'amortissement $\vartheta$ de l'amortisseur d'oscillations, **en ce que** l'unité de contrôle (12) est en outre configurée pour calculer le coefficient d'amortissement $\vartheta$ dans un point de résonnance $f_R$ marqué de manière spécifique, lequel se **caractérise par** une augmentation marquée de l'amplitude $A_{max}$.

**9.** Dispositif selon la revendication 8, **caractérisé en ce qu'**il est en outre prévu une unité de commande au moyen de laquelle peuvent être saisies des valeurs caractéristiques ainsi que des critères spécifiques au véhicule, notamment le type de véhicule ou une valeur de référence dans l'unité de contrôle (12) .

**10.** Dispositif selon la revendication 8, **caractérisé en ce qu'**il est en outre prévu une unité de lecture et une connexion avec une base de données au moyen desquelles sont lus les valeurs caractéristiques et les critères spécifiques au véhicule et l'affectation du véhicule à soumettre aux essais à une catégorie de véhicules est déduite à partir de ceux-ci par l'unité de contrôle (12), ou alors la valeur de référence avec les informations relevées sur la carte grise du véhicule sont déterminée automatiquement par l'unité de contrôle (12) à partir d'une base de données connectée.

**Fig. 1**

**Fig. 2**

**Fig. 3**

**Fig. 4**

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 611960 A2

- DE 102008041745